# EUROPEAN PATENT APPLICATION

(11) **EP 1 688 744 A1**
(43) Date of publication of application: **09.08.2006**
(21) Application number: 04799905.7
(22) Date of filing: 25.11.2004
(51) Int. Cl.: G01N 35/00

(54) **BIOLOGICAL INFORMATION INSPECTION SYSTEM**

(30) Priority: 27.11.2003 JP 2003397517; 27.11.2003 JP 2003397518; 25.12.2003 JP 2003429591
(71) Applicant: AISIN SEIKI KABUSHIKI KAISHA, Kariya-shi, Aichi-ken 448-8650 (JP)
(72) Inventor: FUJITA, Satoshi;, 2-chome, Kariya-shi, Aichi;4488650 (JP); MOMIYAMA, Masayoshi;, 2-chome, Kariya-shi, Aichi;488650 (JP)
(74) Representative: TBK-Patent
(86) International application number: PCT/JP2004/017909
(87) International publication number: WO 2005/052597

(57) **Abstract**

In a biological information inspection system capable of accumulating highly reproducible biological information in a plurality of inspection means and making a multifactorial analysis of related information, simplification and downsizing of the system is achieved. The biological information inspection system 10 of the present invention comprises a sensor chip 20 holding a sample such as genes, a sensor chip holding portion 11 in which the sensor chip 20 is placed, and a data reading portion 13 for acquiring image data of a detection portion 21 and a marker portion 21 of the sensor chip 20. The system further comprises a data calculation unit 16 for executing a plurality of programs for acquiring biological information data from the image data of the detection portion 21. Which of the inspection means the sensor chip 20 corresponds to is identified from the read image data of the marker portion 23. Then the data calculation unit 16 executes a program for the one of the inspection means corresponding to the detection portion 21, thereby detecting biological information peculiar to the sample held on the detection portion 21 from the image data of the detection portion 21. Accordingly, information of the marker portion 23 and information of the detection portion 21 can be acquired by the same mechanism (the data reading portion 13).

## Description

### TECHNICAL FIELD

This invention relates to a biological information inspection system for conducting inspection for biological information such as genes and analyzing obtained biological information.

### BACKGROUND ART

Analysis of biological information such as genes and use of obtained results for prevention and treatment of disease have been carried out. As devices for inspecting and analyzing biological information such as genes, analytical instruments and sensors are known, for example, which are described in a non-patent document (Kazuo HARA et al., "Genome mapping of Type 2 diabetes and susceptibility genes", *Experimental Medicine* (Yodosha Co., Ltd. in Japan), January 2003, pp.5-10). These conventional analytical instruments and sensors, however, are mostly to detect a single target and output a single decision. Nowadays, however, new findings are often obtained by analyzing a plurality of pieces of biological information obtained by a plurality of kinds of detection techniques. Therefore, in order to provide advanced analysis and evaluation results, it is demanded to accumulate highly reproducible data obtained in a plurality of detection techniques and analyze the accumulated related data by linking them with each other.

### DISCLOSURE OF THE INVENTION

### Problems to be Dissolved by the Invention

However, with the conventional analytical instruments and sensors, analysis has been made only based on results in individual inspection techniques and comprehensive analysis of a plurality of inspection results (biological information) obtained from a plurality of inspection techniques cannot be made.

Even if a plurality of detection techniques are carried out, conventional inspections are often conducted by separate devices under different conditions. Therefore, even if there are any, related data are not analyzed precisely due to a difference in conditions, or the obtained data need to be compensated to adjust the difference in conditions. Accordingly, it has been difficult to accumulate highly reproducible data efficiently.

The present invention has been conceived in view of the above circumstances. It is an object of the present invention to provide a biological information inspection system capable of accumulating highly reproducible data (biological information) in a plurality of inspection means (inspection techniques) and provide a biological information inspection system capable of providing advanced analysis and evaluation results by analyzing the accumulated related data. It is another object of the present invention to provide a biological information inspection system improved in simplicity and compactness in the above biological information inspection system.

### Means for Dissolving the Problems

### (First Means)

A biological information inspection system of the present invention, which dissolves the above problems, is characterized by comprising: a plurality of inspection means for detecting biological information; a plurality of kinds of sensor chips corresponding respectively to the plurality of inspection means; a sensor chip holding portion for holding the sensor chips; a sensor chip identifying portion for identifying which of the inspection means one of the sensor chips placed corresponds to, upon the one of the sensor chips being placed in the sensor chip holding portion; a control means for operating the one of the inspection means corresponding to an identification result of the sensor chip identifying portion; a memory means for storing inspection results of the inspection means; and an analysis means for making a multifactorial analysis of characteristics of a living organism from a plurality of inspection results obtained by using the plurality of inspection means.

Each of the sensor chips can comprise a cartridge of a mode corresponding to the sensor chip holding portion and a detection portion of a mode corresponding to each of the plurality of inspection means can be attached to the cartridge.

Moreover, each of the sensor chips employable has a marker portion of a different mode with each corresponding inspection means and the sensor chip identifying portion reads a difference of the marker portion.

The system can further be so structured that a construction in which each of the sensor chips comprises a cartridge portion having a common shape among the plurality of kinds of sensor chips in order to be held by the sensor chip holding portion; a detection portion corresponding to one of the plurality of inspection means; and a marker portion indicating which of the plurality of inspection means the detection portion corresponds to; and the biological information inspection system further comprises a data reading portion for acquiring two-dimensional information of the detection portion and the marker portion; which of the inspection means the detection portion corresponds to being identified from the two-dimensional information of the marker portion and biological information being detected from the two-dimensional information of the detection portion by the one of the inspection means corresponding to the detection portion.

The data reading portion employable acquires image data of the detection portion and the marker portion.

The system can further be so structured that each of the sensor chips has the detection portion and the marker portion arranged side by side in one direction, and the data reading portion comprises a line sensor, the line sensor acquiring images of the marker portion and the detection portion by scanning in the direction in which the marker portion and the detection portion of each of the sensor chips are arranged side by side.

Moreover, the marker portion employable is a bar code or patterned indentations formed on each of the sensor chips.

### (Second Means)

A biological information inspection system of the present invention, which also dissolves the above problems, is a biological information inspection system characterized by comprising: a plurality of inspection means for detecting different kinds of biological information respectively; a plurality of kinds of sensor chips corresponding to the plurality of inspection means; and a sensor chip holding portion capable of holding the plurality of kinds of sensor chips,
each of the sensor chips comprising: a cartridge member having a common shape among the plurality of kinds of sensor chips in order to be held by the sensor chip holding portion; a detection portion corresponding to one of the plurality of inspection means; a marker portion indicating which of the plurality of inspection means the detection portion corresponds to,
the biological information inspection system further comprising a data reading portion for acquiring two-dimensional information of the detection portion and the marker portion,
which of the inspection means the detection portion corresponds to being identified from the two-dimensional information of the marker portion, and biological information being detected from the two-dimensional information of the detection portion by the one of the inspection means corresponding to the detection portion.

It is to be noted that the inspection means in the present means is a device having a biological information detection means for detecting biological information from two-dimensional information of a detection portion. Here, the biological information detection means can calculate two-dimensional information data, which is produced by converting two-dimensional information of the detection portion into electronic data, by a particular algorithm, and converting the two-dimensional information data into biological information data indicating a particular piece of biological information. This particular algorithm is executed by a data calculation unit for executing a program corresponding to this algorithm. At this time, the algorithm for converting the two-dimensional information data of the detection portion into biological information data can be different with the kind of a sample on the detection portion and desired biological information.

Here, comprising "a plurality of inspection means" in the present means indicates that the system is provided with "a plurality of biological information detection means". Even when the system is provided with only one data reading portion, having a plurality of biological information detection means is regarded as comprising a plurality of inspection means. Further, data calculation carried out by "biological information detection means" is actually carried out by a data calculation unit, but "having a plurality of biological information detection means" does not necessarily indicate having a plurality of data calculation units. Namely, even if there is actually only one data calculation unit, a case in which a plurality of programs for detecting different kinds of biological information are executed by the only one data calculation unit is regarded as "having a plurality of biological information detection means".

The data reading portion employable acquires image data of the detection portion and the marker portion.

The system can further be so structured that each of the sensor chips has the detection portion and the marker portion arranged side by side in one direction, and the data reading portion comprises a line sensor, the line sensor acquiring images of the marker portion and the detection portion by scanning in the direction in which the marker portion and the detection portion of each of the sensor chips are arranged side by side.

Moreover, the marker portion employable is a bar code or patterned indentations formed on each of the sensor chips.

### Advantages of the Invention

(1) In the above first means, since the system comprises a plurality of inspection means and a sensor chip holding portion in which a plurality of kinds of sensor chips corresponding to the plurality of inspection means can be placed, a plurality of inspections can be conducted by one system. Beside, since the plurality of inspections can be conducted by placing the sensor chips in the same sensor chip holding portion, variations in inspection results between a plurality of inspections can be reduced.

Moreover, the inspection results of the plurality of inspections are stored in a memory means soon after the inspections, and analyzed by an analysis means based on related information already stored. Therefore, advance analysis and evaluation results can be provided by accumulating highly reproducible data in a plurality of inspection means (inspection techniques) and analyzing the accumulated related data.

Besides, since each of the sensor chips comprises a cartridge having a shape corresponding to the sensor chip holding portion, a plurality of kinds of sensor chips can be placed in one sensor chip holding portion. At the same time, since a detection portion of a mode corresponding to each of the inspection means is attached to the cartridge, a plurality of inspections can be carried out, although there is only one sensor chip holding portion.

Since each of the sensor chips has a marker portion of a different mode with each corresponding inspection means, even if a plurality of kinds of sensor chips corresponding respectively to a plurality of inspection means are placed in one sensor chip holding portion, a sensor chip identifying portion can identify which of the inspection means each of the sensor chips corresponds to. Therefore, even if a plurality of kinds of inspection techniques are used by one inspection system, an inspection technique corresponding to a sensor chip placed in the sensor chip holding portion can always be used.

Namely, the sensor chip identifying portion identifies which of the inspection means one sensor chip corresponds to by a marker portion formed on that sensor chip. What is needed is only enabling identification as to which of the inspection means that sensor chip corresponds to from only a part of that sensor chip. So, sensor chips can be identified more easily.

Moreover, if the marker portion can indicate identification of not only information of the corresponding inspection means but also information of the number of samples, whether the number of specimens is single or plural can also be identified in the same detection technique.

As the marker portion, it is possible to simply form different indentations with each kind of sensor chips or an IC which stores information of the corresponding inspection means and the like.

(2) In the above second means, since the system comprises a plurality of inspection means and a sensor chip holding portion capable of holding a plurality of kinds of sensor chips corresponding to the plurality of inspection means, a plurality of inspections can be carried out by a single system. Moreover, since each of the sensor chips comprises a cartridge portion having a common shape among the plurality of kinds of sensor chips in order to be held by the sensor chip holding portion, a plurality of inspections can be carried out by placing a plurality of kinds of sensor chips in the same sensor chip holding portion, so a plurality of inspection techniques can be used under roughly the same conditions. Therefore, more reproducible data can be accumulated efficiently. Besides, more precise analysis can be made by using a plurality of kinds of data obtained by the inspections.

Here, in the biological information inspection system of the present invention, the inspection means detects biological information from two-dimensional information of the detection portion, and the data reading portion acquires also two-dimensional information of the marker portion in acquiring two-dimensional information of the detection portion. Therefore, which of the inspection means the detection portion of a sensor chip corresponds to can be identified from the obtained two-dimensional information of the marker portion. Accordingly, there is no need to provide separately a mechanism for identifying which of the inspection means a sensor chip placed in the sensor chip holding portion corresponds to (a marker identifying portion), and this contributes to simplification and downsizing of the system. Besides, two-dimensional information of the detection portion and the marker portion can be acquired by the same mechanism, and highly reproducible data can be accumulated efficiently.

Furthermore, if image data of the detection portion and the marker portion of each sensor chip are acquired as their two-dimensional information, simple photographing of the detection portion and the marker portion by photographic means achieves easy acquisition of two-dimensional information of the detection portion and the marker portion.

Here, when each of the sensor chips has the detection portion and the marker portion arranged side by side on one surface of each of the sensor chips and a line sensor is employed as a data reading portion, two-dimensional information (images) of the detection portion and the marker portion can be acquired easily by making the line sensor scanning one-dimensionally from one end to the other end of each of the sensor chips.

Furthermore, the marker portion can be identified more easily by employing a bar code or indentations as a marker portion.

It is also possible to detect a particular physical quantity such as quantity of electric charge, light absorbance, and luminescence intensity in the detection portion or the marker portion by scanning the detection portion and the marker portion by using a probe or the like as a data reading portion, and acquire distributional information of the physical quantity in the detection portion and the marker portion as two-dimensional information of the detection portion and the marker portion.

### BRIEF DESCRIPTION OF THE DRAWINGS

Figure 1 is a schematic view showing an example of a biological information inspection system of the present invention.

Figure 2 is a flow chart showing an operation of the biological information inspection system of the present invention.

Figure 3 is an explanatory view showing a method of acquiring two-dimensional information of a detection portion and a marker portion of a sensor chip.

Figure 4 is a schematic view showing another example of a biological information inspection system of the present invention.

Figure 5 is a flow chart showing an operation of the biological information inspection system of the present invention.

Figures 6 are explanatory views of an example of a marker portion of a sensor chip and a scheme of a sensor chip identifying portion.

Figure 7 is a view showing a different example of a marker portion of a sensor chip from that of Figure 6.

### BEST MODES FOR CARRYING OUT THE INVENTION

Hereinafter, an outline of the biological information inspection system according to the present invention will be described with reference to the drawings.

### (First Embodiment)

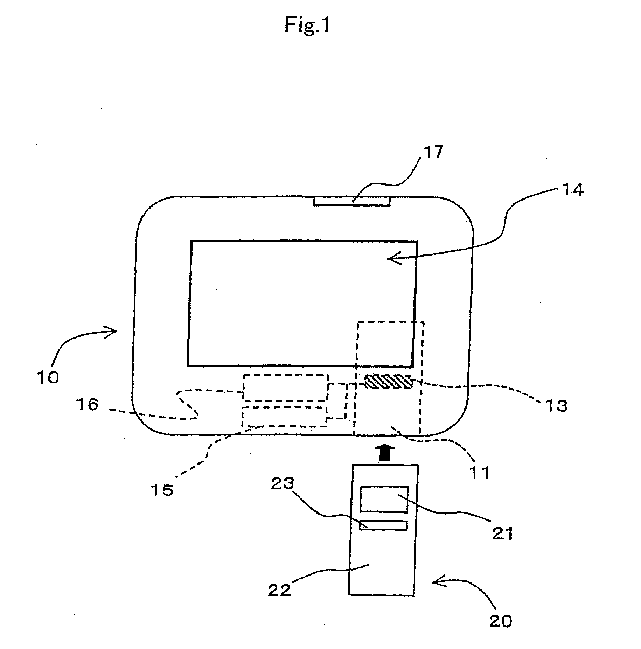

Figure 1 is a view of a biological information inspection system 10 of this embodiment. The biological information inspection system 10 comprises a sensor chip 20 holding a sample of genes or the like, a sensor chip holding portion 11 in which the sensor chip 20 is placed, and a data reading portion 13 for acquiring two-dimensional information of a detection portion 21 and a marker portion 23 of the sensor chip 20. Here, the data reading portion 13 photographs images of the detection portion 21 and the marker portion 23 as two-dimensional information, and acquires image data as two-dimensional information data. The biological information inspection system 10 comprises a plurality of inspection means so that this system can execute a plurality of kinds of inspections. The plurality of inspection means conduct different inspections for a plurality of kinds of sensor chips 20 to be placed in one sensor chip holding portion 11. Namely, among the plurality of kinds of sensor chips 20 corresponding respectively to different inspection means, one sensor chip 20 corresponding to an inspection means which an operator desires to use is placed in the sensor chip holding portion 11.

Specifically, each of the sensor chips 20 comprises a detection portion 21 of a mode corresponding to each inspection means, and a cartridge portion 22 having a common shape among the plurality of kinds of sensor chips 20 regardless of the inspection means. Namely, the detection portion 21 has a different mode with each corresponding detection means, while the cartridge portion 22 has the same shape regardless of different corresponding inspection means. Owing to each of the sensor chips 20 of this mode, one sensor chip holding portion 11 can hold different kinds of sensor chips 20 (sensor chips 20 having different kinds of detection portions 21) by determining the shape of the sensor chip holding portion 11 to conform in shape to the cartridge portion 22 of each of the sensor chips 20.

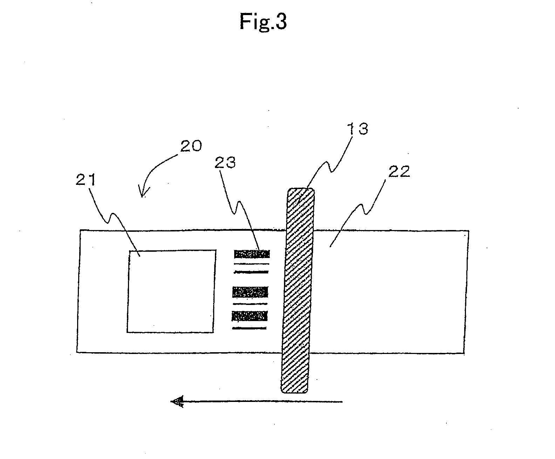

Each of the sensor chips 20 also has a marker portion 23. This marker portion 23 indicates which of a plurality of inspection means a detection portion 21 formed on that sensor chip 20 corresponds to. In this embodiment, the marker portion 23 is a bar code 23 as shown in Figure 3. A difference in the shape of bar codes allows identification as to which of the inspection means the detection portion 21, and eventually the sensor chip 20, corresponds to.

On the other hand, the plurality of inspection means shares one data reading portion 13; the biological information inspection system 10 has one data reading portion 13. In this embodiment, the data reading portion 13 is a line sensor 13 as shown in Figure 3. A method of acquiring two-dimensional information (images) of a detection portion 21 and a marker portion 23 of one sensor chip 20 will be described with reference to Figure 1 and Figure 3. As illustrated in Figure 3, the detection portion 21 and a bar code 23, which is a marker portion 23, are arranged side by side on one surface of the sensor chip 20. When the biological information inspection system 10 is put into operation with the sensor chip 20 held by the sensor chip holding portion 11, the line sensor 13 scans in a direction in which the detection portion 21 and the marker portion 23 are arranged side by side (in the direction of the arrow in Figure 3). Thereby, the detection portion 21 and the bar code 23 can be photographed by the same mechanism. Then, which of the inspection means the detection portion 21 of the sensor chip 20 corresponds to can be identified from the obtained image of the bar code 23. Since photographing of the detection portion 21 and that of the marker portion 23 are carried out by the same mechanism as mentioned above, there is no need to provide separately a mechanism for identifying the marker portion 23 of the sensor chip 20 and this contributes to simplification and downsizing of the system.

It is to be noted that as the data reading portion 13, it is possible to employ not only a line sensor 13 which scans on the sensor chip 20 but also a CMOS camera which simply photographs the detection portion 21 and the marker portion 23 of the sensor chip 20 at the same time.

The biological information inspection system 10 further comprises a memory (memory means) 15 for storing image data read by the data reading portion 13 as two-dimensional information data, a data calculation unit 16 for converting image data read by the data reading portion 13 or image data stored in the memory 15 into biological information data indicating particular biological information, a display portion 14 for displaying the obtained biological information, and an interface portion 17 for transferring data stored in the memory 15 to other computers (See Figure 1). Further, the memory 15 stores a plurality of programs for executing a plurality of different algorithms for acquiring particular biological information data based on the image data of the detection portion 21, and the data calculation unit 16 can execute the plurality of programs.

The image data of the detection portion 21 acquired by the data reading portion 13 is stored in the memory 15 together with an identification result of the marker portion 23 (information as to which of the inspection means the detection portion 21 corresponds to). Then biological information is detected from the image data of the detection portion 21, in accordance with the one of the inspection means corresponding to the detection portion 21.

Hereinafter, an example of use of the biological information inspection system 10 of this embodiment will be described. The biological information inspection system 10 of this embodiment can be used, for example, for diabetes testing and treatment analysis. Of diabetes, type 2 diabetes is a multifactorial disease caused by a combination of genetic factors and environmental factors such as high-fat diets and lack of exercise. Therefore, it is important in determining risk of developing diabetes to not only check blood glucose level or the like but also carry out inspections, paying attention to genetic factors. Therefore, a plurality of inspection means are necessary to precisely determine risk of developing diabetes. Even when diabetes has already developed, it is important to identify its causal factors and choose a treatment method appropriate for the causes.

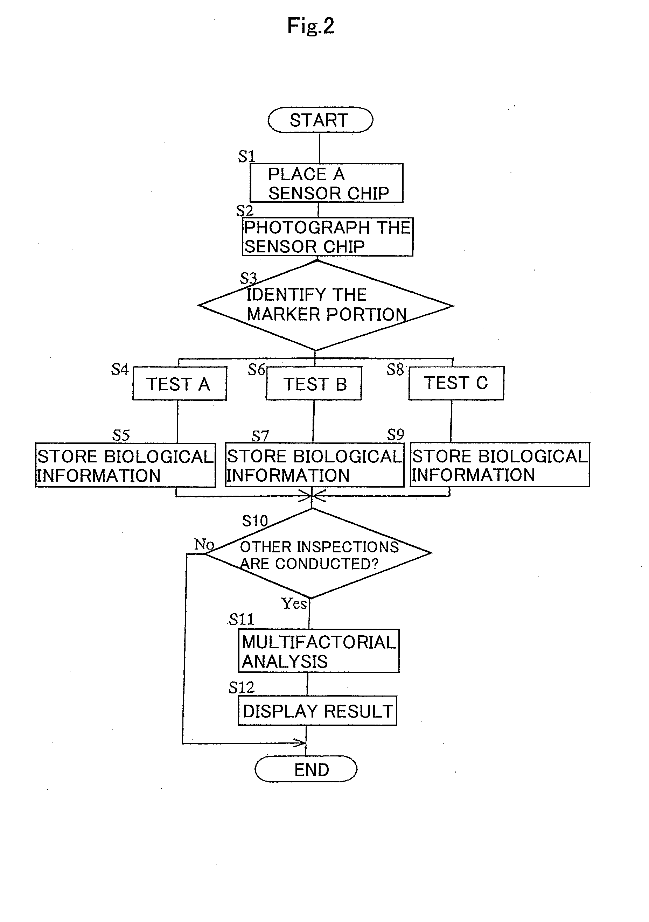

An example of use of the biological information inspection system 10 of the present invention in diabetes testing and treatment analysis will be described with reference to Figure 2. First, a sensor chip 20 having a testing sample placed on a detection portion 21 is placed in the sensor chip holding portion 11 of the biological information inspection system 10 (step 1) . Upon actuation of the biological information inspection system 10, the data reading portion 13 starts to photograph images of the detection portion 21 and a marker portion 23 of the sensor chip 20 (step 2).

Which of the inspection means the detection portion 21 of the sensor chip 20 placed in the sensor chip holding portion 11 corresponds to is identified from an image analysis of the obtained image of the marker portion 23 (step 3). Here, examples of the inspection means include blood glucose testing and methods of detecting presence or absence of a particular gene or its abundance from intensity of fluorescence uniquely connected to the aforementioned particular gene. Examples of methods of detecting presence or absence of a particular gene or its abundance include a method of amplifying a particular gene by PCR (polymerase chain reaction) or the like and then detecting presence or absence of the particular gene and its abundance by means of fluorescence intensity, and a DNA chip method of detecting expression of genes in a sample by means of positions of fluorescence detected on a chip. The detection portion 21 of each sensor chip 20 has a mode corresponding to each inspection means by having a sample corresponding to one of these inspection means.

When which of the inspection means the sensor chip 20 placed corresponds to is identified in step 3, the image data of the detection portion 21 is once stored in the memory 15 together with information as to which of the inspection means the detection portion 21 corresponds to. Then the image data stored in the memory 15 is processed in accordance with the corresponding inspection means. Description will be made here about a case of employing a blood glucose test (Test A), a genetic factor check test (Test B) and an environmental factor check test (Test C) as a plurality of inspection means. Specifically, when the sensor chip 20 placed is identified as corresponding to Test A in step 3, the data calculation unit 16 executes a Test A program for executing Test A in step 4. Specifically, blood is placed as a sample on the detection portion 21 of the sensor chip 20 which corresponds to Test A, and the blood is added with a fluorescent material to attach to glucose. Therefore, probability of glucose being present in the blood is shown by area of a fluorescent region in the blood. Therefore, in Test A in step 4, the data calculation unit 16 executes a program for detecting abundance of glucose as biological information from the image data of the detection portion 21. A result of Test A is stored in the memory 15 of the biological information inspection system 10 as information of its quantative value, risk of diabetes and so on, together with a sample number, which is given to every subject, and information of the inspection means (step 5) and displayed on the data display portion 14.

Alternatively, when the sensor chip 20 placed is identified as corresponding to Test B in step 3, the image data of the detection portion 21 acquired by the data reading portion 13 is processed in accordance with Test B (step 6). Chromosomes are held as a sample on the detection portion 21 of the sensor chip 20 corresponding to Test B, and the sample is added with a fluorescent material which emits fluorescence, attached to suspected diabetes susceptibility genes (for instance, calpain-3, PI-3, adiponectin). Biological information can be acquired by extracting information of area of a fluorescent region or the like from image information of the sample by means of image processing in accordance with Test B. The data calculation unit 16 executes a program for detecting presence or absence of diabetes susceptibility genes or abundance of diabetes susceptibility genes as biological information from the image data of the detection portion 21 in this state, thereby detecting biological information. A result of Test B is stored in the memory 15 as information as to presence or absence of the diabetes susceptibility genes, their abundance and the like, together with a sample number and information of the inspection means (step 7) and displayed on the data display portion 14. Furthermore, whether genetic factors are large or small among factors of diabetes can also be determined from the result of Test B, and the determination result can be stored in the memory 15 and displayed on the data display portion 14.

Instead, when the sensor chip 20 placed is identified as corresponding to Test C in step 3, the image data of the detection portion 21 acquired by the data reading portion 13 is processed in accordance with Test C (step 8). Chromosomes are held as a sample on the detection portion 21 of the sensor chip 20 corresponding to Test C, and this sample is added with a fluorescent material which emits fluorescence, attached to suspected obesity genes (for instance, leptin, β 3-adrenaline receptor, SHP). The data calculation unit 16 executes a program for detecting presence or absence of obesity genes, abundance of obesity genes, and the like as biological information from the image data of the detection portion 21 in this state, thereby detecting biological information. A result of Test C is stored in the memory 15 as information as to presence or absence of the obesity genes, their abundance and the like together with a sample number and information of the inspection means (step 9), and displayed on the data display portion 14. Moreover, whether environmental factors are large or small among factors of diabetes can also be determined from the result of Test C and the determination result can be stored in the memory 15 and displayed on the data display portion 14.

When one of the inspections has been thus carried out, whether inspections by other inspection means are conducted or not is determined in step 10. When a plurality of inspections are determined to be conducted in this step, a multifactorial analysis based on a plurality of inspection results is carried out in step 11. As a result, a more suitable treatment method can be found out in each case.

Specifically, when Test A, Test B and Test C are all completed and Test A determines that the subject has diabetes (or is prone to have diabetes), Test B determines that influence of genetic factors is large, and Test C determines that influence of environmental factors is also large, a treatment method for reducing influence of environmental factors by diet therapy and exercise therapy and so on and at the same time reducing influence of genetic factors by gene therapy is suggested. In this case, the method to be suggested as gene therapy is determined in accordance with the kind of genes extracted by Test B. When expression of diabetes susceptibility genes is detected by the test, a treatment is suggested based on their expression. For example, when the test finds out that expression of the adiponectin gene, which is an insulin sensitizing agent, is small, a method of supplying insulin while conducting adiponectin replacement therapy as a gene therapy can be employed.

Alternatively, when Test A diagnoses that the subject has diabetes (or is prone to have diabetes) and Test B shows that there is influence of genetic factors but Test C shows that there is little influence of environmental factors, a more efficient treatment method for reducing only influence of genetic factors (a treatment method emphasizing gene therapy rather than diet therapy and exercise therapy) can be suggested. In contrast, when Test A diagnoses that the subject has diabetes (or is prone to have diabetes) and Test B shows that there is little influence of genetic factors but Test C shows that there is influence of environmental factors, a treatment method for reducing only environmental factors (for example, a treatment method comprising mainly diet therapy and exercise therapy and placing little emphasis on gene therapy) can be suggested.

When Test A does not diagnose that the subject has diabetes but Test B and/or Test C indicates that there are genetic factors and/or environmental factors, a preventive measure is suggested based on these test results.

In a multifactorial analysis, it is possible to not only conduct an analysis based on information of a plurality of inspections with the same sample number, but also conduct the same inspection on, for instance, relatives of a patient and store the inspection results in the memory 15 together with the relation to the patient and make an affected sib pair analysis from the relation between these pieces of information.

The analysis results as above are displayed on the data display portion 14 of the biological information inspection system 10 (Figure 1) to provide an operator with information of a treatment method in step 12.

Reproducibility on the same detecting device is demanded in order to provide a series of standards of care to specify causes of a disease and select a treatment plan in this way. Here, the biological information inspection system 10 of this embodiment can obtain more stably reproducible data, because one sensor chip holding portion 11 can hold even different sensor chips 20 corresponding to different inspection means and one data reading portion 13 can acquire information (two-dimensional information) of a sample placed on the detecting portion 21 of each sensor chip 20.

Further, since information of the detection portion 21 and information of the marker portion 23 of each sensor chip 20 can be acquired by the same mechanism (a line sensor 13) as two-dimensional information, there is no need to separately provide the system with a mechanism for identifying which of the inspection means a sensor chip 20 placed in the sensor chip holding portion 11 corresponds to, and accordingly simplification and downsizing of the system can be achieved.

In addition, information stored in the memory 15 (memory means) of the biological information inspection system 10 can also be stored in other memory means such as a hard disk drive or an external storage unit of a personal computer through the interface portion 15.

### (Second Embodiment)

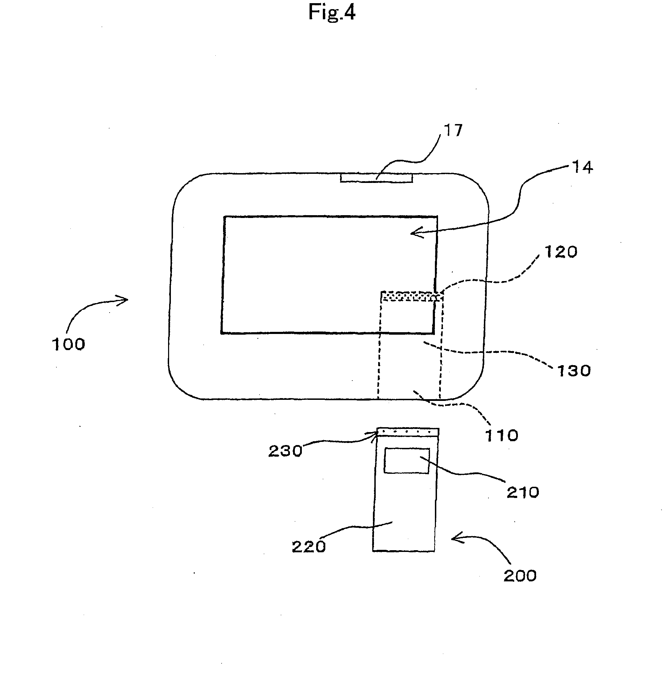

Figure 4 is a view of a biological information inspection system 100 of this embodiment. The biological information inspection system 100 shown in Figure 4 has basically the same construction as that of the biological information inspection system 10 shown in Figure 1. It is to be noted that in Figure 4, the same numerals designate similar components to those of the biological information inspection system shown in Figure 1. The biological information inspection system 100 comprises a sensor chip holding portion 110 in which a sensor chip 200 holding a sample of genes or the like is placed, a data reading portion 130 for reading biological information from the sensor chip 200, and a sensor chip identifying portion 120 for identifying the kind of the sensor chip placed in the sensor chip holding portion 110. The biological information inspection system 100 has a plurality of inspection means so that the system can carry out a plurality of kinds of inspections. The plurality of inspection means conduct different inspections for a plurality of different sensor chips 200 placed in one sensor chip holding portion 110. Therefore, the plurality of kinds of sensor chips 200 corresponding respectively to different inspection means are to be placed in the sensor chip holding portion 110.

Specifically, each of the sensor chips 200 comprises a detection portion 210 of a mode corresponding to each inspection means, and a cartridge portion 220 of a uniform mode regardless of the inspections means. Owing to each of the sensor chips 200 of this shape, one sensor chip holding portion 110 can hold different kinds of sensor chips 200 by determining the shape of the sensor chip holding portion 110 of the biological information inspection system 100 to conform in shape to the cartridge portion 220 of each of the sensor chips 200.

Each of the sensor chips 200 also has a marker portion 230 indicating which kind of inspection means the detection portion 210 corresponds to. On the other hand, the biological information inspection system 100 has a marker identifying portion 120 as a sensor chip identifying portion. When a marker portion 230 of one sensor chip 200 is placed on the marker identifying portion 120 of the biological information inspection system, the marker identifying portion 120 specifies the kind of that sensor chip 200.

The biological information inspection system 100 of this embodiment further comprises a control means, not shown, for operating the inspection means corresponding to the identification result of the marker identifying portion 120. An example of the control means is those similar to the memory 15 and the data calculation unit 16 of the biological information inspection system 10 shown in Figure 1. When the marker identifying portion 120 identifies the kind of that sensor chip 200, the control means starts a program for operating a corresponding one of the inspection means among a plurality of inspection means provided to the biological information inspection system 100.

The biological information inspection system 100 further comprises a memory means for storing data read by the data reading portion 130, an analysis means for making a multifactorial analysis of biological information based on the stored data, a display portion 14 for displaying an analysis result, and an interface portion 15 for transferring data stored in the memory means to other computers.

Results of inspections conducted by the inspection means are read by the data reading portion 130 and stored in the memory means. At this time, a plurality of inspections are conducted on one specimen and inspection results are stored in the memory means in connection with a sample number given to the specimen and the kind of the inspection means. Then, when an inspection by one inspection means is completed or there is an input of, for instance, a sample number of a specimen into the system from an input means, a plurality of inspection results obtained by a plurality of inspection means are read by the analysis means and a multifactorial analysis is made based on the plurality of inspection results. A result of the multifactorial analysis is displayed on the display portion 14.

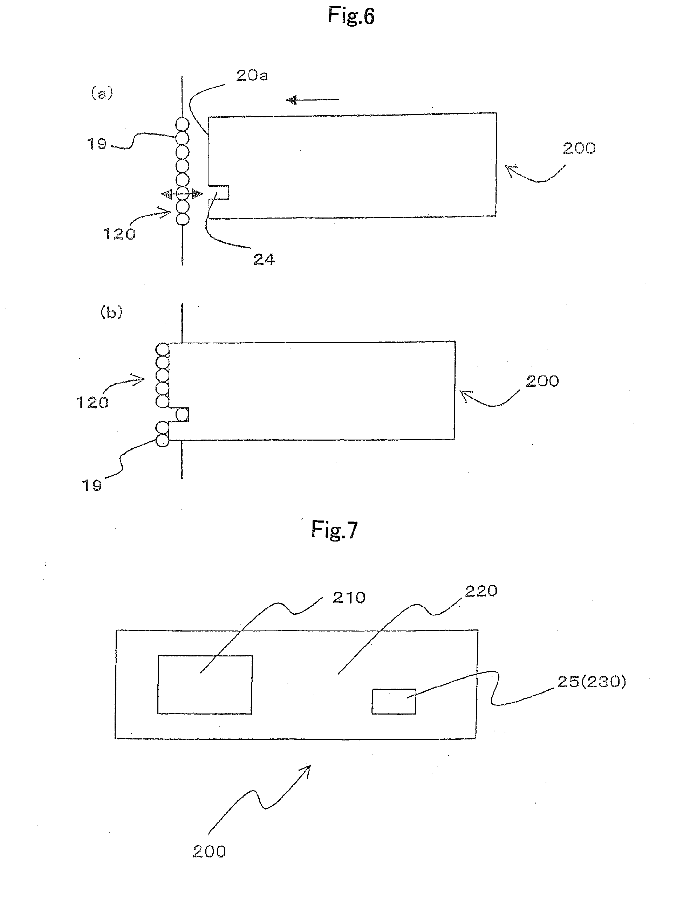

Here, those shown in Figure 6 can be employed as the marker portion 230 of each of the sensor chips and the marker identifying portion 110 of the biological information inspection system 100. Figures 6 illustrate states of placing one sensor chip 200 in the sensor chip holding portion 110, and are side views of the sensor chip 200. Here is shown an example of a mode of inserting the sensor chip 200 into the sensor chip holding portion 110 formed as an opening in the biological information inspection system 100 so as to have the sensor chip 200 held by the sensor chip holding portion 110. As shown in Figure 6 (a) , a notch 24 is formed in a unique shape to one inspection means corresponding to that sensor chip 200 on one end side of the sensor chip 200 to be inserted into the sensor chip holding portion 110. On the other hand, a plurality of notch sensors 19 are arranged on a side of the sensor chip holding portion 110 in a manner to contact an end surface 20a of the sensor chip 200 to be inserted. Each of the notch sensors 19 can move between a first position used when a sensor chip 200 is not inserted in the sensor chip holding portion 110, and a second position to be moved into by a push of the end surface 20a of a sensor chip 200 when the sensor chip 200 is inserted into the sensor chip holding portion 110. Here, in the following description, it is assumed that when each of the notch sensors 19 lies at the first position, each of the notch sensors 19 is in off state, and when each of the notch sensors 19 lies at the second portion, each of the notch sensors 19 is in on state.

As shown in Figure 6, when one sensor chip 200 having a notch 24 on its end surface 20a is inserted into the sensor chip holding portion 110, the notch sensors 19, which are pushed by the end surface 20a are moved into the second position and set in on state. On the other hand, since one notch sensor 19 corresponding to the position of the notch 24 is not pushed by the end surface 20a, this notch sensor 19 remains at the first position and is kept in off state. Here, when one sensor chip 200 is inserted into the sensor chip holding portion 110, the on/off states of the plurality of notch sensors are changed in accordance with the corresponding inspection means by changing the position and shape of a notch 24 to be formed on the end surface 20a of the sensor chip 200. Thus identification of the corresponding inspection means can be achieved.

Owing to the above construction, when one sensor chip 200 is inserted into the sensor chip holding portion 110, a target inspection means can be selected automatically.

The marker portion 230 of the sensor chip 200 can also employ a configuration shown in Figure 7. Namely, as shown in Figure 7, it is possible to employ an IC 25 as the marker portion 230 of the sensor chip 200 and a reader device capable of reading information stored in this IC as the marker identifying portion 120.

Hereinafter, an example of use of the biological information inspection system 100 of this embodiment will be described. The biological information inspection system 100 of this embodiment can be used, for example, for diabetes testing and treatment analysis.

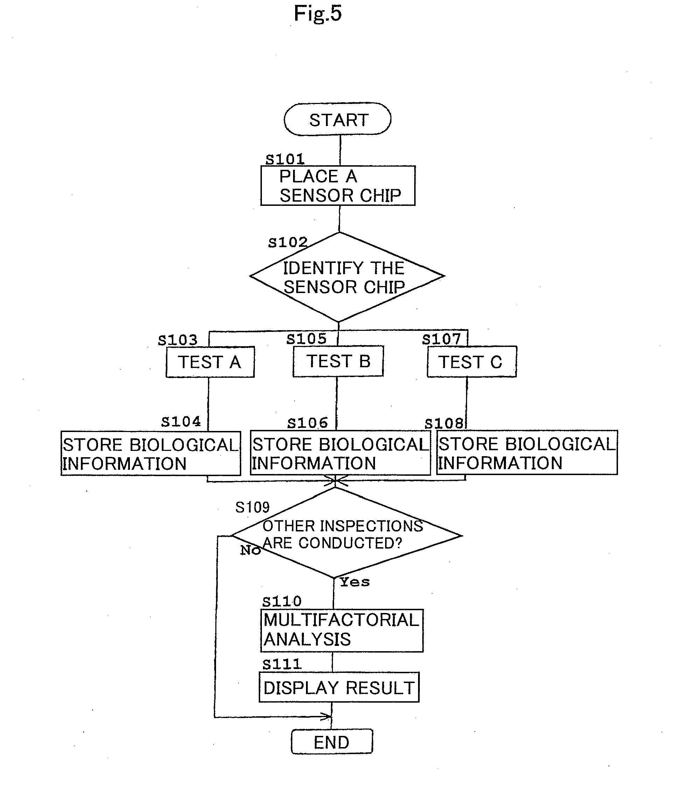

An example of use of the biological information inspection system 100 of the present invention for diabetes testing and treatment analysis will be described with reference to Figure 5. First, in step 101, one sensor chip 200 having a sample such as nucleic acid protein placed on a detection portion 210 is placed in the sensor holding portion 110 of the biological information inspection system 100. In step 102, the marker identifying portion 120 identifies which of the inspection means the sensor chip 200 placed in the sensor chip holding portion 110 corresponds to. Here, examples of the inspection means include blood glucose testing, and the southern hybridization, SNPs, Dot Blot, and PCR (Polymerase Chain Reaction) for inspecting genetic factors. A sample corresponding to one of these inspection means is placed on a detection portion 210 of each of the sensor chips 200 in a mode corresponding to each inspection method.

When which of the inspection means the sensor chip 200 placed corresponds t is identified in step 102, inspection is carried out by the corresponding inspection means. Description will be made here about a case of employing a blood glucose test (Test A), a genetic factor check test (Test B) and an environmental factor check test (Test C) as a plurality of inspection means. When the sensor chip 200 placed is identified as corresponding to Test A in step 102, Test A is carried out in step 103. Specifically, Test A is carried out by sampling blood and measuring the glucose concentration. A result of Test A is stored in the memory means of the biological information inspection system 100 as information of its quantitative value, diabetes risk and the like, together with a sample number, which is given to every subject, and information of the inspection means (step 104).

Alternatively, when the sensor chip 200 placed is identified as corresponding to Test B in step 102, Test B is carried out in step 105. Specifically, Test B is carried out by an electrophoresis unit as an inspection means provided to the biological information inspection system 100. This Test B can detect presence or absence of diabetes susceptibility genes. It is to be noted that Test B can also detect expression of diabetes susceptibility genes. Similarly to step 104, a result of Test B is stored in the memory means together with a sample number and information of the inspection means (step 106).

Instead, when the sensor chip 200 placed is identified as corresponding to Test C in step 102, Test C is carried out in step 107. Specifically, Test C can be carried out by a RNA expression analyzer provided to the biological information inspection system 100. This Test C can detect obesity genes and measure their expression and deviations from standard values. Similarly to step 104 or 106, a result of Test C is stored in the memory means of the biological information inspection system 100 together with a sample number and information of the inspection means (step 108).

When one of the inspections has been thus carried out, whether other inspections are conducted or not is determined in step 109. When a plurality of inspections are determined to be conducted in this step, a multifactorial analysis based on a plurality of inspection results is made in step 110. As a result, a more suitable treatment method can be found out in each case in the same way as in the first embodiment.

Reproducibility on the same detecting device is demanded in order to provide a series of standards of care to specify causes of a disease and select a treatment plan in this way. Here, the biological information inspection system 100 of this embodiment can obtain more stably reproducible data, because one sensor chip holding portion 110 can hold even a plurality of kinds of sensor chips 200 corresponding to different inspection means and one data reading portion 130 can conduct inspection for a sample placed on a detecting portion 210 of each of the sensor chips 200.

In addition, information stored in the memory means of the biological information inspection system 100 can also be stored in other memory means through the interface portion 15.

## Claims

1. A biological information inspection system, **characterized by** comprising:
a plurality of inspection means for detecting biological information;
a plurality of kinds of sensor chips corresponding respectively to said plurality of inspection means;
a sensor chip holding portion for holding said sensor chips;
a sensor chip identifying portion for identifying which of said inspection means one of said sensor chips placed corresponds to, upon said one of said sensor chips being placed in said sensor chip holding portion;
a control means for operating said one of said inspection means corresponding to an identification result of said sensor chip identifying portion;
a memory means for storing inspection results of said inspection means; and
an analysis means for making a multifactorial analysis of characteristics of a living organism from a plurality of inspection results obtained by using said plurality of inspection means.

2. A biological information inspection system as recited in claim 1, **characterized in that** each of said sensor chips comprises a cartridge of a mode corresponding to said sensor chip holding portion, a detection portion of a mode corresponding to each of said plurality of inspection means being attached to said cartridge.

3. A biological information inspection system as recited in claim 1, **characterized in that** each of said sensor chips has a marker portion of a different mode with each corresponding inspection means and said sensor chip identifying portion reads a difference of said marker portion.

4. A biological information inspection system as recited in claim 1, **characterized in that**:
each of said sensor chips comprises a cartridge portion having a common shape among said plurality of kinds of sensor chips in order to be held by said sensor chip holding portion, a detection portion corresponding to one of said plurality of inspection means, and a marker portion indicating which of said plurality of inspection means said detection portion corresponds to; and
said biological information inspection system further comprises a data reading portion for acquiring two-dimensional information of said detection portion and said marker portion,
which of said inspection means said detection portion corresponds to being identified from said two-dimensional information of said marker portion, and biological information being detected from said two-dimensional information of said detection portion by said one of said inspection means corresponding to said detection portion.

5. A biological information inspection system as recited in claim 4, **characterized in that** said data reading portion acquires image data of said detection portion and said marker portion.

6. A biological information inspection system as recited in claim 4, **characterized in that** each of said sensor chips has said detection portion and said marker portion arranged side by side in one direction, and said data reading portion comprises a line sensor, said line sensor acquiring images of said marker portion and said detection portion by scanning in said direction in which said marker portion and said detection portion of each of said sensor chips are arranged side by side.

7. A biological information inspection system as recited in one of claims 4 to 6, **characterized in that** said marker portion is a bar code or patterned indentations formed on each of said sensor chips.

8. A biological information inspection system, **characterized by** comprising:
a plurality of inspection means for detecting different kinds of biological information respectively; a plurality of kinds of sensor chips corresponding to said plurality of inspection means; and a sensor chip holding portion capable of holding said plurality of kinds of sensor chips,
each of said sensor chips comprising: a cartridge member having a common shape among said plurality of kinds of sensor chips in order to be held by said sensor chip holding portion; a detection portion corresponding to one of said plurality of inspection means; a marker portion indicating which of said plurality of inspection means said detection portion corresponds to,
said biological information inspection system further comprising a data reading portion for acquiring two-dimensional information of said detection portion and said marker portion,
which of said inspection means said detection portion corresponds to being identified from said two-dimensional information of said marker portion, and biological information being detected from said two-dimensional information of said detection portion by said one of said inspection means corresponding to said detection portion.

9. A biological information inspection system as recited in claim 8, **characterized in that** said data reading portion acquires image data of said detection portion and said marker portion.

10. A biological information inspection system as recited in claim 8, **characterized in that** each of said sensor chips has said detection portion and said marker portion arranged side by side in one direction, and said data reading portion comprises a line sensor, said line sensor acquiring images of said marker portion and said detection portion by scanning in said direction in which said marker portion and said detection portion of each of said sensor chips are arranged side by side.

11. A biological information inspection system as recited in one of claims 8 to 10, **characterized in that** said marker portion is a bar code or patterned indentations formed on each of said sensor chips.
